## Europäisches Patentamt
## European Patent Office
## Office européen des brevets

(19)

(11) Veröffentlichungsnummer : **0 224 529**
**B1**

(12)

# EUROPÄISCHE PATENTSCHRIFT

(45) Veröffentlichungstag der Patentschrift :
28.03.90

(21) Anmeldenummer : 86903371.2

(22) Anmeldetag : 10.06.86

(86) Internationale Anmeldenummer :
PCT/EP 86/00346

(87) Internationale Veröffentlichungsnummer :
WO/86074 (18.12.86 Gazettee 86/27)

(51) Int. Cl.⁵ : **H 01 M 10/10, H 01 M 10/12**

(54) BLEIAKKUMULATOR MIT EINEM THIXOTROPEN GEL ALS ELEKTROLYT UND VERFAHREN ZU SEINER HERSTELLUNG.

(30) Priorität : 13.06.85 DE 3521200

(43) Veröffentlichungstag der Anmeldung :
10.06.87 Patentblatt 87/24

(45) Bekanntmachung des Hinweises auf die Patenterteilung : 28.03.90 Patentblatt 90/13

(84) Benannte Vertragsstaaten :
AT BE CH FR GB IT LI

(56) Entgegenhaltungen :
DE—B— 1 273 640
US—A— 1 417 007
US—A— 1 634 850
US—A— 3 180 760
US—A— 4 391 036
Chemical Abstracts, vol. 83, No. 22, 1 December 1975,
Columbus, Ohio, US see page 185, abstract 182033g

(73) Patentinhaber : JACHE, Otto
Am Molkenborn 73
D-6470 Büdingen 1 (DE)

(72) Erfinder : JACHE, Otto
Am Molkenborn 73
D-6470 Büdingen 1 (DE)

(74) Vertreter : Linser, Heinz et al
Patentanwälte Heinz Linser Dipl. Ing. Eckhardt Eyer
Robert-Bosch-Strasse 12a Postfach 10 22 10
D-6072 Dreieich (DE)

EP 0 224 529 B1

**Beschreibung**

Die Erfindung betrifft ein Verfahren zur Herstellung eines Bleiakkumulators mit einem im wesentlichen aus Schwefelsäure und einem Gelbildner bestehenden thixotropen Gel als Elekrolyt, bei dem in einem ersten Schritt die Poren der Aktivmassen in den Elektroden und die Poren der den Elektroden zugeordneten Separatoren mit einem vom Gelbildner freien schwefelsauren Elektrolyt getränkt werden.

Ein derartiger Bleiakkumulator mit einem thixotropen Gel als Elektrolyt ist beispielsweise in der Schweizer Patentschrift 391 807 beschrieben. Hierbei handelt es sich um einen lageunabhängigen, im Betriebe gasdichten Akkumulator geringer Selbstentladung mit einem festgelegten Elektrolyten, der dadurch gekennzeichnet ist, daß dem Elektrolyten zur Verfestigung Stoffe zugesetzt sind, die zur Bildung eines thixotropen Gels befähigt sind, wobei es die Thixotropie des Gels gestattet, den Elektrolyten vorübergehend zum Zwecke des Einfüllens zu verflüssigen. Hierbei wird davon ausgegangen, daß die Teilchen des Gelbildners zum Zeitpunkt des Einfüllens, also in dem Zustandsbereich, in dem noch kein wieder ausgebildetes Gel vorliegt, bereits soweit assoziiert sind, daß sie im direkten Kontakt mit den Aktivmassen nicht mehr in der Lage sind, in deren enge Poren einzudringen.

Die in der CH-PS 391 807 beschriebenen Bleiakkumulatoren besitzen jedoch den Nachteil, daß für sie nur Elektroden mit verhältnismäßig geringen Abmessungen, insbesondere Flächen verwendet werden können. Der Grund besteht darin, daß die verflüssigte Form des thixotropen Gels bereits beim Einfüllen beginnt, wieder festes Gel zurückzubilden. Der damit verbundene stetige Anstieg der Viskosität behindert zunehmend den Fluß des Füllelektrolyten in entferntere Gebiete der Zellen und bringt ihn letztlich völlig zum Stillstand. Auf diese Weise ist die Größe dieser Akkumulatoren auf kleinere Kapazitäten bis etwa 20 Ah beschränkt.

Ein weiterer Nachteil der in der CH-PS 391 807 beschriebenen Akkumulatoren besteht darin, daß das eingefüllte thixotrope Gel wie ein flüssiger Elektrolyt die Aktivmassen beider Elektroden zunächst vollständig abdeckt und hierbei auch in die Poreneingänge der Aktivmassen eindringt. Hieraus resultieren Leistungseinbußen an beiden Elektroden. Für die negativen Elektroden ergibt sich zusätzlich, daß der für die Wartungsfreiheit langlebiger Batterien so wichtige Verzehr des an der positiven Elektrode entwickelten Sauerstoffs an der negativen Elektrode zunächst vollständig unterbunden ist. Die hierfür notwendige 3-Phasengrenze gasförmig-flüssig-fest kann sich erst nach erheblichen Wasserverlusten durch entsprechende Rißbildungen im Gel langsam aufbauen. Da sich das Gel aus den Poreneingängen kaum entfernen läßt und auf diese Weise nicht mehr die gesamte Oberfläche der negativen Masse erfaßt werden kann, bleibt der Sauerstoffverzehr eingeschränkt.

In der Deuschen Patentschrift 1 671 693 ist ein weiterer Bleiakkumulator mit einem thixotropen Gel als Elektrolyt beschrieben, der aufgrund der Verwendung antimonfreier Legierungen für die Masseträger der Elektroden ebenfalls einen wartungsfreien Betrieb zuläßt. Darüberhinaus wird durch die gleichzeitige Anwendung von Kieselsäure und Phosphorsäure im Elektrolyten eine hohe Zyklenfestigkeit erreicht, die sogar größer ist, als die eines vergleichbaren, mit antimonhaltigen Masseträgern ausgerüsteten Bleiakkumulators. Zur Herstellung dieses Akkumulators werden trockene, geladene Platten in die Zellen eingebaut. Zum Füllen werden die Zellengefäße evakuiert. Der zum Füllen vorübergehend verflüssigte thixotrope Elektrolyt wird unter Vakuum eingefüllt, wonach die Zellengefäße wieder belüftet werden.

Verglichen mit der außergewöhnlichen Verbesserung der Lebensdauer durch die gleichzeitige Anwendung von Kieselsäure und Phosphorsäure, insbesondere im Entlade- Lade- Zyklenbetrieb, bringt der durch Evakuieren und Belüften beschleunigte Füllvorgang keine besonderen Vorteile hinsichtlich der anwendbaren Elektrodenabmessungen. In bezug auf Leistungseinbußen an beiden Elektroden und dem Sauerstoffverzehr an der negativen Elektrode ergeben sich nur weitere Verschlechterungen.

In der DE-PS 30 41 953 ist ein Bleiakkumulator beschrieben, der neben einem thixotropen Gel als Elektrolyt beliebig große Abmessungen der Elektroden zuläßt. Die Begrenzung der Fließwege des Füllelektrolyten wird dadurch vermieden, daß zum Füllen der Zellen ein Elektrolyt verwendet wird, der aufgrund seiner Zusammensetzung von sich aus weder ein thixotropes Gel darstellt noch bilden kann. Der Füllelektrolyt enthält zwar den gesamten Gelbildner zur Ausbildung eines ausreichend festen Gels. Er enthält ebenfalls Schwefelsäure, jedoch nur in einer so geringen Konzentration, daß weder während des Einfüllens noch danach eine selbständige Gelbildung stattfinden kann. Die für die Gelbildung benötigte Schwefelsäure ist in den Aktivmassen der Elektroden elektrochemisch gebunden. Die Ausbildung des thixotropen Gels kann erst durch einen Ladeprozeß ausgelöst werden, der die gebundene Schwefelsäure freisetzt.

Der Füllelektrolyt gemäß der DE-PS 30 41 953 besitzt hervorragende Fließeigenschaften. Seine Viskosität entspricht fast der eines gelfreien Elektrolyten, da die diskreten Teilchen des Gelbildners nur wenig oder noch nicht assoziiert sind. Das hat aber auch zum Nachteil, daß der Gelbildner tiefer als bei einem vorübergehend verflüssigtem thixotropen Gel in die Poren der Aktivmassen eindringen kann. Hieraus resultieren unausweichlich Leistungseinbußen an den betroffenen Elektroden. Ferner besteht der Nachteil, daß an der negativen Elektrode der für die Wartungsfreiheit wichtige Sauerstoffverzehr durch den direkten Kontakt mit dem thixotropen Gel zunächst völlig unterbunden und später nur sehr zögernd aufgenommen wird.

Der Erfindung liegt somit die Aufgabe zugrunde, einen Bleiakkumulator der eingangs aufgeführten Art so auszubilden, daß er wartungsfrei, auslaufsicher und zyklenfest ist und daß das Einfüllen eines zu diesem Zweck vorübergehend verflüssigten thixotropen Gels in den Elektrolytraum zwischen den Elektroden unabhängig von den Abmessungen und der Flächenausdehnung der Elektroden auf eine Weise ermöglicht wird, die einen direkten Kontakt des Gels mit der Oberfläche der Elektroden ausschließt und so ein Eindringen des Gelbildners in die Poren der Aktivmassen und ein Abdecken der Poreneingänge der negativen Masse vermeidet.

Diese gestellte Aufgabe wird gemäß der Erfindung durch die Merkmale des Anspruches 1 gelöst. Weitere Ausbildungen der Erfindung sind in den Unteransprüchen dargestellt.

Die besonderen Merkmale eines Bleiakkumulators gemäß der Erfindung bestehen darin, daß der im wesentlichen aus Schwefelsäure und einem Gelbildner bestehende Elektrolyt in zwei verschiedene Phasen unterteilt ist. Die erste Phase ist flüssig und völlig frei von Gelbildnern. Die zweite Phase ist fest und liegt als thixotropes Gel vor. Die flüssige Phase des Elektrolyten ist im wesentlichen auf die Aktivmassen der Elektroden und den angrenzenden Teil der den Elektroden zugeordneten Separatoren beschränkt, in deren Poren sie kapillar gebunden ist. Die feste, als thixotropes Gel vorliegende Phase füllt den Elektrolytraum insbesondere zwischen den Elektroden aus, hierbei aber auch den Teilbereich der den Elektroden zugeordneten Separatoren, der dem Elektrolytraum zugewandt ist. Beide Phasen des Elektrolyten füllen die Poren der den Elektroden zugeordneten Separatoren hierbei vollständig aus, so daß ein lückenloser und inniger Übergang zwischen beiden Phasen ausgebildet ist. Die Schwefelsäurekonzentrationen in den beiden Teilelektrolyten werden derartig gewählt, daß nach einem Konzentrationsausgleich der beiden Elektrolyte im Gesamtelektrolyt im geladenen Zustand des Akkumulators die je nach Verwendungszweck übliche Arbeitskonzentration erreicht wird.

In Weiterbildung der Erfindung liegt die Konzentration der Schwefelsäure im zweiten Teilelektrolyten so niedrig, daß dieser sich zum Zwecke des Einfüllens durch Rühren verflüssigen läßt, und die Konzentration des Gelbildners liegt so hoch, daß nach dem Konzentrationsausgleich der Schwefelsäure ein festes Gel gebildet wird, das sich durch mechanische Kräfte nicht mehr verflüssigen läßt.

Der direkte Kontakt des Gels mit den Elektroden ist jedoch dabei völlig unterbunden. Die Poren und Poreneingänge der Aktivmassen bleiben auf diese Weise völlig gelfrei. Der so ausgerüstete Akkumulator zeigt damit einerseits das typische Leistungsverhalten eines mit flüssigem Elektrolyten gefüllten Bleiakkumulators, behält aber andererseits uneingeschränkt die Vorzüge eines mit einem thixotropen Gel als Elektrolyt ausgerüsteten Akkumulators bei und läßt darüberhinaus noch eine zeitliche Ausdehnung des wartungsfreien Betriebes zu.

Als Separatoren für die Zuordnung zu den Elektroden eignen sich insbesondere Faservliese, aber auch textile Gewebe oder andere poröse Flächengebilde aus elektrolytbeständigen Materialien, die ausreichend flexibel sind, die Elektroden ganzflächig satt und spaltfrei abzudecken. Um den flüssigen Teil des Elektrolyten in ihren Poren binden und im Kontakt mit den aktiven Massen festhalten zu können, müssen diese Separatoren außerdem eine ausreichende Kapillarität besitzen. Besonders vorteilhaft sind Separatoren mit unterschiedlich großen Poren, die neben vielen kleinen Poren oder engen Kapillaren eine geringe Zahl gröberer Poren besitzen, die bei eingegrenztem Elektrolytvolumen den Elektrolyten nicht kapillar zu binden vermögen und damit Gasen einen freien Durchtritt gestatten. Die letztgenannten Separatoren eignen sich besonders gut zum Abdecken der negativen Elektroden, um an ihrer Oberfläche eine 3-Phasengrenze auszubilden, dort den Verzehr des an den positiven Elektroden entwickelten Sauerstoffs zu ermöglichen und zu beschleunigen und damit die Wartungsfreiheit zu verbessern. Um die gewünschte Wirkung an den Elektroden zu erzielen genügen Separatoren bzw. Vliese mit relativ geringen Blattstärken, die vermittels Abstandshalter in ihrer Position gehalten werden. Hierzu dienen auf die Separatoren aufgebrachte Rippen oder andere hierfür übliche separate Einbaumittel.

Für den wartungsfreien Betrieb eines Akkumulators gemäß der Erfindung bestehen die Ausgangsmaterialien für die Aktivmassen, deren Trägergerüste sowie alle metallischen Verbindungen innerhalb der Zellen aus Feinblei bzw. Feinbleilegierungen, die frei von Antimon oder anderen Legierungselementen sind, die die Wasserstoffüberspannung an der negativen Elektrode herabsetzen.

Der Elektrolyt besteht aus chemisch reiner, verdünnter Schwefelsäure, die in ihrer Konzentration den üblichen Betriebsvorschriften für den jeweiligen Verwendungszweck des Akkumulators angepaßt ist. Die gelförmige Phase des Elektrolyten enthält zusätzlich den Gelbildner, der aus hochdisperser, auf pyrolytischem Wege hergestellter Kieselsäure mit einer Teichengröße von 0,01 bis 0,02 $\mu$m besteht. Für die Ausbildung eines thixotropen Gels gemäß der Erfindung werden als untere Grenze etwa 4,5 Gew.-% benötigt, die, je nachdem welche Anforderungen an die Festigkeit des Gels gestellt sind, beliebig bis auf etwa 14 Gew.-% gesteigert werden können.

In einer weiteren vorteilhaften Ausgestaltung eins Akkumulators gemäß der Erfindung enthält der Elektrolyt, bezogen auf das Gewicht der zugehörigen positiven aktiven Masse, 2 bis 5 Gew.-% Phosphorsäure, vozugsweise Orthophosphorsäure. Bei Akkumulatoren, die für ausschließlichen Lade- Entladebetrieb bestimmt sind und an die hinsichtlich ihrer Zyklenfestigkeit besonders hohe Anforderungen gestellt sind, werden im Zusammenhang mit dem Zusatz der Phosphorsäure die positiven Elektroden nur mit grobporigen Faservliesen anstelle von kapillaraktiven abgedeckt oder auf eine Abdeckung gänzlich verzichtet. Auf diese Weise wird hier bewußt der Phasenübergang vom Gel auf den flüssigen Elektrolyten in die Poreneingänge der positiven aktiven Masse verlegt. Der damit verbundene Leistungsverlust der positiven Elektrode wird durch den hier wichtigeren Gewinn einer außerordentlichen Verlängerung der Zyklenlebensdauer mehr als wettgemacht.

Der Akkumulator gemäß der Erfindung ist nicht nur auslaufsicher, wartungsfrei und zyklenfest, er ist außerdem so ausgebildet, daß das Einfüllen eines zu diesem Zweck vorübergehend verflüssigten thixotropen Gels als Elektrolyt unabhängig von den Abmessungen und der Flächenausdehnung der Elektroden erfolgen kann. Das im Zusammenhang damit angewendete Füllverfahren geht von bereits fertig montierten Akkumulatoren aus, deren Elektroden bereits durch eine vorausgegangene Formierung in den elektrochemisch aktiven Zustand überführt worden sind und denen zur Durchführung des Verfahrens erfindungsgemäß kapillaraktive Separatoren zugeordnet wurden. Es ist hierbei ohne Belang, ob die Formation der Elektroden im Gehäuse des Akkumulators oder in getrennten Gefäßen vorgenommen wurde und ob die Elektroden damit noch mit der Formationssäure behaftet sind oder durch einen im Anschluß an die Formation üblichen Trockenprozeß gegangen sind.

Das Einfüllen des beanspruchten, aus zwei verschiedenen Phasen bestehenden Elektrolyten in die Zellen des Akkumulators erfolgt erfindungsgemäß in zwei getrennten Schritten, wobei der erste Schritt darin besteht, die Poren der Aktivmassen in den Elektroden sowie die Poren der den Elektroden zugeordneten Separatoren vollständig mit der flüssigen und gelfreien Phase des Elektrolyten zu tränken. Falls die Poren der Elektroden noch Formiersäure enthalten, muß diese durch den Füllelektrolyten der vorbestimmten Dichte ausgetauscht werden. Bei Vorlage trockener Elektroden ist der Füllelektrolyt lediglich im Überschuß soweit einzufüllen, daß die Elektroden vollständig bedeckt sind. Hierbei wird das Tränken durch kurzzeitiges evakuieren des Akkumulatorengehäuses unterstützt, um Gaseinschlüsse in den Poren zu vermeiden. Danach wird der Überschuß des Füllelektrolyten durch Ausgießen oder andere Art und Weise aus dem Akkumulatorengehäuse wieder vollständig entfernt, wobei die Poren der Aktivmassen und die kapillaraktiven Bereiche der Separatoren mit der gelfreien Phase des Elektrolyten gefüllt bleiben.

Der zweite Schritt des Einfüllens besteht darin, den Elektrolytraum mit der zweiten, als thixotropes Gel vorliegenden Phase des Elektrolyten zu füllen. Hierbei ist unter Elektrolytraum der gesamte noch verbleibende Raum innerhalb der Akkumulatorenzelle, insbesondere jedoch zwischen den Elektroden zu verstehen, der, jedoch nur bis zu einer vorbestimmten Füllhöhe, nicht von den Elektroden selbst einschließlich der ihnen zugeordneten Separatoren und der flüssigen Phase des Elektrolyten eingenommen wird. Zum Zwecke des Einfüllens wird das im wesentlichen aus Schwefelsäure und einem Gelbildner bestehende thixotrope Gel in bekannterweise zunächst vorübergehend verflüssigt und dann unmittelbar in diesem Zustand in die Zellen des Akkumulators eingefüllt. Hierbei dringt das Gel trotz seiner Verflüssigung nicht oder nur wenig in die bereits gefüllten Poren der den Elektroden zugeordneten Separatoren ein. Damit ist ein weiteres Vordringen des Gels bis zu den Poreneingängen der aktiven Massen hin unterbunden, es sei denn, daß im Interesse einer Verbesserung der Zyklenfestigkeit durch Zusatz von Phosphorsäure auf eine Zuordnung eines entsprechenden Separators zur positiven Elektrode verzichtet worden ist.

Da dem Gel beim Füllvorgang weder Elektrolytflüssigkeit zugeführt noch entzogen werden kann, werden die Fließwege des Gels allein von der Zeitdauer bestimmt, innerhalb der sich die Wiederverfestigung des Gels vollzieht. Der zeitliche Ablauf der Wiederverfestigung kann erfindungsgemäß jedoch weitgehendst variiert und hinausgeschoben werden, so daß Akkumulatorenzellen mit beliebig großflächigen Elektroden befüllt werden können. Erfindungsgemäß wird dies dadurch erreicht, daß in der als thixotropes Gel vorliegenden Phase des Elektrolyten die Konzentration der Schwefelsäure entsprechend herabgesetzt und in der flüssigen Phase des Elektrolyten so weit heraugesetzt wird, daß nach einem Konzentrationsausgleich sich die beabsichtigte Arbeitskonzentration im Gesamtelektrolyten einstellt. Der Konzentrationsausgleich wird durch eine unmittelbar nach dem Befüllen begonnene Entladung mit anschließender Wiederaufladung vorgenommen und beschleunigt.

Da die aufkonzentrierte flüssige Phase des Elektrolyten auf diese Weise nur relativ kurze Zeit auf die Elektroden einwirken kann, ist die Anwendung sehr hoher Schwefelsäurekonzentrationen noch möglich, bspw. 50-60 %, wie sie sonst für Bleiakkumulatoren nicht mehr anwendbar sind, ohne daß es zu Schädigungen kommt. Da der Konzentrationausgleich zwischen dem kapillar gebundenen und dem im Elekrolytraum befindlichen Elektrolyten nur über Diffusion erfolgen kann, werden die Fließwege des Gels durch die hohe Schwefelsäurekonzentration in der flüssigen Phase des Elektrolyten ebensowenig beeinflußt wie es überraschenderweise auch zu keinerlei Schichtung der Säuredichte kommt.

Zur Verbesserung der Lebensdauer der positiven Elektroden, insbesondere deren Zyklenfestigkeit, wird dem Elektrolyten Phosphorsäure zugesetzt, wobei gleichzeitig auf die Zuordnung kapillaraktiver Separatoren zur positiven Elektrode verzichtet wird oder lediglich weitmaschige Vliese zugeordnet werden, die das noch flüssige Gel noch hindurchtreten lassen. Die Phosphorsäure kann sowohl der flüssigen Phase als auch der

gelförmigen Phase des Elektrolyten zugesetzt werden, wobei die flüssige Phase vorzuziehen ist.

Die Erfindung wird an einem kurzen Beispiel erläutert :

Das Beispiel geht von einer Zelle für Industriebatterien handelsüblicher Größe aus, wie sie für Elekrotraktion verwendet wird. Das Gehäuse besteht aus Polypropylen und ist durch einen aufgeschweisten Zellendeckel aus gleichem Material bis auf eine Einfüllöffnung verschlossen. Die elektrischen Anschlüsse sind durch den Zellendeckel gas- und elektrolytdicht nach außen geführt. Die positive Elektrode besteht aus drei 19-teiligen Röhrchenplatten einer Baulänge von 315 mm, die über eine Polbrücke mit dem Zellenpol zu einer Einheit verschweißt sind. Die negative Elektrode ist analog aufgebaut, besteht aber aus vier Gitterplatten entsprechender Größe. Masseträger, Polbrücken und Pole bestehen aus antimonfreien Bleilegierungen.

Den Gitterplatten der negativen Elektrode sind 0,4 mm starke Glasfaservliese zugeordnet, die aufgrund ihres Aufbaus kapillaraktiv sind, d. h. flüssigen Elektrolyt aufzusaugen und festzuhalten imstande sind. Als Abstandshalter dienen aufgelegte Rippen oder gelochte und mit Rippen versehene steife Kunststoffbleche.

Das Gesamtvolumen des Betriebselektrolyten der Zelle beträgt 2,5 Liter. Die mit trockenen, geladenen Elektroden ausgerüstete Zelle wird bis zum oberen zulässigen Füllstand mit verdünnter Schwefelsäure der Dichte 1,395 bei 20 °C = 50 Gew.-% gefüllt. Nach kurzzeitigem evakuieren zur Entfernung eingeschlossener Luft oder Gasbläschen wird die überschüssige Säure durch Ausgießen entfernt. In den Poren der Elektroden und Separatoren verbleiben 1,2 Liter der eingefüllten Säure. Zum Befüllen des noch freien Elektrolytraumes wird ein thixotropes Gel aus verdünnter Schwefelsäure der Dichte 1,16 bei 20 °C unter Zusatz von 12 Gew.-% einer auf pyrogenem Wege hergestellten Kieselsäure mit einer Teichengröße von durchschnittlich 0,012 µm verwendet, das sich nach vorausgegangener Verflüssigung zügig und blasenfrei einfüllen läßt. Nach kurzer Standzeit wird die Zelle mit dem 5 stündigen Entladestrom zu 80 % ihrer Nennkapazität entladen. Hierbei verfestigt sich das Gel und behält auch am Schluß der sich anschließenden Wiederaufladung seine Festigkeit bei. Die Säuredichte in der Gelphase des Elektrolyten und auch in den Poren beträgt gleichmäßig 1,27 $g/cm^3$ und entspricht damit der geforderten Betriebssäuredichte. Mit dem Einsatz eines nur einseitig nach außen öffnenden Ventils in die Einfüllöffnung ist die Zelle betriebsbereit.

Zur Verbesserung der Zyklenfestigkeit wird dem Elektrolyten bezogen auf sein Gesamtvolumen von 2,5 Litern etwa 75 g einer 85 %igen Orthophosphorsäure der flüssigen Phase des Elektrolyten vor dem Einfüllen zugegeben. Das entspricht etwa 25,5 g H3PO4/Liter bzw. auf das Gewicht des Elektrolyten im geladenen Zustand der Zelle bezogen etwa 2 %.

## Patentansprüche

1. Verfahren zur Herstellung eines Bleiakkumulators mit einem im wesentlichen aus Schwefelsäure und einem Gelbildner bestehenden thixotropen Gel als Elektrolyt, bei dem in einem ersten Schritt die Poren der Aktivmassen in den Elektroden und die Poren der den Elektroden zugeordneten Separatoren mit einem vom Gelbildner freien schwefelsauren Elektrolyt getränkt werden, dadurch gekennzeichnet, daß im ersten Schritt die Poren der Aktivmassen und die kapillar-aktiven Bereiche der Separatoren mit der gelfreien Phase des Elektrolyten gefüllt bleiben, daß der gelbildner-freie Elektrolyt als ein Teil des Gesamtelektrolyten eine höhere Schwefelsäurekonzentration besitzt, als sie sich nach einem Konzentrationsausgleich im Gesamtelektrolyt einstellt und in einem zweiten Schritt die noch freien Räume zwischen den Elektroden einschließlich des noch restlichen Elektrolytraumes mit einem im wesentlichen aus Schwefelsäure und einem Gelbildner bestehenen thixotropen Gel als Elektrolyt ausgefüllt werden und der als ein zweiter Teil des Gesamtelektrolyten eine niedrige Schwefelsäurekonzentration besitzt, als sie sich nach einem Konzentrationsausgleich im Gesamtelektrolyt einstellt, so daß nach dem Konzentrationsausgleich ein festes Gel gebildet wird, wobei ein direkter Kontakt des Gels mit der Oberfläche der Elektroden ausgeschlossen und so ein Eindringen des Gelbildners in die Poren der Aktivmassen und ein Abdecken der Poreneingänge der negativen Masse vermieden werden.

2. Verfahren nach Anspruch 1, dadurch gekennzeichnet, daß die Schwefelsäurekonzentrationen in den beiden Teilelektrolyten derartig gewählt werden, daß nach einem Konzentrationsausgleich der beiden Elektrolyte im Gesamtelektrolyt im geladenen Zustand des Akkumulators die je nach Verwendungszweck übliche Arbeitskonzentration erreicht wird.

3. Verfahren nach Anspruch 1 oder 2, dadurch gekennzeichnet, daß die Konzentration der im zweiten Teilelektrolyten enthaltenen Schwefelsäure so niedrig liegt, daß dieser sich zum Zwecke des Einfüllens durch Rühren verflüssigen läßt, und die Konzentration des Gelbildners so hoch liegt, daß nach dem Konzentrationsausgleich der Schwefelsäure ein festes Gel gebildet wird, das sich durch mechanische Kräfte nicht mehr verflüssigen läßt.

4. Verfahren nach Ansprüchen 1 oder einem der voranstehenden Ansprüche, dadurch gekennzeichnet, daß als Gelbildner eine auf pyrogenem Wege hergestellte, hochdisperse Kieselsäure mit einer Teilchengröße von 0,01-0,1 µm, vorzugsweise 0,01-0,02 µm verwendet wird.

5. Bleiakkumulator, hergestellt nach Anspruch 1 oder einem der voranstehenden Ansprüche, dadurch gekennzeichnet, daß der Gesamtelektrolyt bezogen auf sein Gewicht im geladenen Zustand des Akkumulators etwa 2 Gew.% Orthophosphorsäure enthält, bezogen auf das Gewicht der zugehörigen positiven aktiven Masse von 2 bis 5 %.

## Claims

1. A process for the production of a lead accumulator containing a thixotropic gel substantially consisting of sulphuric acid and a gelling agent as the electrolyte, wherein the pores of the active compositions in the electrodes and the pores of the separators allocated to the electrodes are soaked with a sulphuric electrolyte free of gelling agent during a first stage, characterised in that during the first stage, the pores of the active compositions and the capillarily active areas of the separators remain filled with the gel-free phase of the electrolyte, that the electrolyte free of gelling agent forming a part of the overall electrolyte has a higher sulphuric acid concentration than that resulting in the whole electrolyte after a concentration balance is established and that during a second stage, the still unoccupied spaces between the electrodes, inclusive of the still available electrolyte space, are filled with a thixotropic gel consisting substantially of sulphuric acid and a gelling agent as the electrolyte and which as a second part of the overall electrolyte has a lower sulphuric acid concentration than that established in the whole electrolyte after a concentration balance occurs, so that a solid gel is formed after the concentration balance is established, a direct contact of the gel with the surface of the electrodes being impossible and a penetration of the gelling agent into the pores of the active compositions and a coverage of the pore inlets of the negative composition bein prevented in this manner.

2. A process according to claim 1, characterised in that the sulphuric acid concentrations in the two part-electrolytes are so selected that after a balance of concentrations occurs, the operating concentrationcustomary as a function of the purpose of application is obtained in the charged condition of the accumulator.

3. A process according to claim 1 to 2, characterised in that the concentration of the sulphuric acid contained in the second part-electrolytelies at so low a level that the same may be liquefied by stirring for filling purposes and the concentration of the gelling agent lies at so high a level that a solid gel is formed after the sulphuric acid concentration balance occurs, which may no longer be liquefied by means of mechanical forces.

4. A process according to claim 1 or one of the preceding claims, characterised in that a high-dispersion silicic acid produced by a pyrogenic method and having a granulometry of 0.01-0.1 µm and preferably 0.01 to 0.02 µm is utilised as a gelling agent.

5. A lead accumulator, produced in accordance with claim 1 or one of the preceding claims, characterised in that as compared to its total weight in the charged condition of the accumulator, the whole electrolyte contains approximately 2 ponderal % of orthophosphoric acid, related to the weight of the corresponding positive active composition from 2 to 5 %.

## Revendications

1. Procédé de fabrication d'un accumulateur au plomb ayant comme électrolyte un gel thixotrope formé essentiellement d'acide sulfurique et d'un gélifiant, dans lequel, dans une première étape, les pores du matériau actif dans les électrodes, et les pores des séparateurs associés aux électrodes, sont saturés d'électrolyte d'acide sulfurique exempt de gélifiant, caractérisé en ce que, au cours de la première étape, les pores du matériau actif et les régions des séparateurs actives par capillarité restent remplis de la phase exempte de gel de l'électrolyte, en ce que l'électrolyte exempt de gélifiant, en tant que partie de tout l'électrolyte, possède une plus forte concentration en acide sulfurique que celle qui s'établit dans l'ensemble de l'électrolyte après égalisation des concentrations et, au cours d'une seconde étape, les espaces encore libres entre les électrodes, y compris l'espace résiduel pour l'électrolyte sont remplis, comme électrolyte, d'un gel thixotrope formé de gélifiant et d'acide sulfurique, et cette seconde partie de l'ensemble de l'électrolyte possède une moindre concentration en acide sulfurique que celle qui s'établit dans l'ensemble de l'électrolyte après égalisation des concentrations, de telle sorte qu'après égalisation des concentrations il se forme un gel solide, ce qui fait qu'un contact direct du gel avec la surface des électrodes est exclut, et qu'une pénétration du gélifiant dans les pores du matériau actif et un masquage des ouvertures des pores du matériau négatif sont évités.

2. Procédé selon la revendication 1, caractérisé en ce que les concentrations d'acide sulfurique dans les deux électrolytes partiels sont choisies de telle sorte que, après égalisation des concentrations des deux électrolytes dans un électrolyte global, à l'état chargé de l'accumulateur, on atteint la concentration de travail usuelle pour l'utilisation envisagée.

3. Procédé selon la revendication 1 ou 2, caractérisé en ce que la concentration de l'acide sulfurique contenu dans le second électrolyte partiel est si faible, que celui-ci se laisse liquéfier par agitation, en vue du remplissage, et la concentration du gélifiant est si élevée que, après égalisation des concentrations de l'acide sulfurique, il se forme un gel solide qui ne se laisse plus liquéfier par des forces mécaniques.

4. Procédé selon la revendication 1 ou l'une des revendications précédentes, caractérisé en ce que l'on utilise comme gélifiant un acide silicique produit par pyrogenèse, à forte dispersion, avec des particules de 0,01-0,1 µm, de préférence 0,01-0,02 µm.

5. Accumulateur au plomb, fabriqué selon la revendication 1 ou l'une des revendications précédentes, caractérisé en ce que l'électrolyte glo-

bai contient, à l'état de charge de l'accumulateur, quelque 2 % en poids d'acide orthophosphorique rapportés à son poids, et de 2 à 5 %, rapportés au poids du matériau actif positif associé.